# EUROPÄISCHE PATENTANMELDUNG

(11) **EP 1 892 913 A1**
(43) Veröffentlichungstag der Anmeldung: **27.02.2008**
(21) Anmeldenummer: 06017663.3
(22) Anmeldetag: 24.08.2006
(51) Int. Cl.: H04L 29/06, H04Q 7/38

(54) **Verfahren und Anordnung zum Bereitstellen eines drahtlosen Mesh-Netzwerks**

(71) Anmelder: SIEMENS AKTIENGESELLSCHAFT, 80333 München (DE)
(72) Erfinder: Falk, Rainer, Dr., 85386 Eching (DE); Kohlmayer, Florian, 82319 Starnberg (DE)

(57) **Zusammenfassung**

Die Erfindung betrifft ein Verfahren sowie eine Anordnung zum Bereitstellen eines drahtlosen Mesh-Netzwerks, bei denen im Falle, dass ein sich am Mesh-Netzwerk anmeldender Teilnehmer eine MAC-Adresse übermittelt, die bereits im Mesh-Netzwerk vorhanden ist, eine Zulassungsprozedur derart durchgeführt wird, dass innerhalb des Mesh-Netzwerks keine zwei unterschiedlichen Teilnehmer identische MAC-Adressen aufweisen.

## Beschreibung

Die Erfindung betrifft ein Verfahren zum Bereitstellen eines drahtlosen Mesh-Netzwerks gemäß dem Oberbegriff des Anspruchs 1 sowie eine Anordnung zum Bereitstellen eines drahtlosen Mesh-Netzwerks gemäß dem Oberbegriff des Anspruchs 24.

Ein drahtloses Maschen- bzw. Mesh-Netzwerk ist ein vermaschtes Netz, das beispielsweise in einem Wireless Local Area Network (WLAN) implementiert ist. Bei einem Mesh-Netzwerk kann ein mobiler Knoten Daten, die von einem anderen mobilen Knoten stammen, an einen weiteren mobilen Knoten weiterleiten oder an eine Basisstation übertragen. In einem Maschennetzwerk bzw. Mess-Netzwerk (Mesh-Network) können weite Distanzen überspannt werden, insbesondere in unebenen oder schwierigen Terrain. Maschennetze arbeiten zudem sehr zuverlässig, da jeder mobile Knoten mit einigen anderen Knoten verbunden ist. Wenn ein Knoten ausfällt, beispielsweise auf Grund eines Hardware-Defekts, suchen dessen Nachbarknoten eine alternative Datenübertragungsroute. Maschennetze bzw. Mesh-Networks können feste oder mobile Geräte mit einbeziehen.

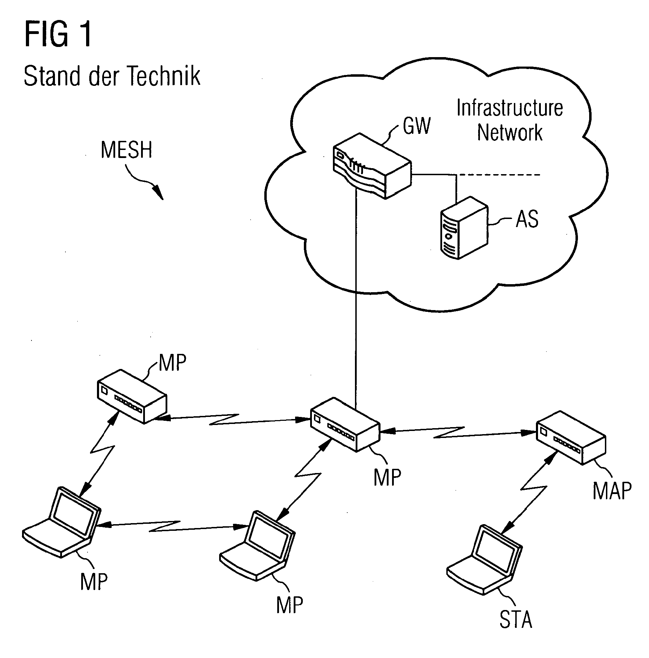

In Figur 1 ist, wie oben erläutert, ein Mesh-Netzwerk MESH, welches mit einem Infrastrukturnetzwerk INFRASTRUCTURE NETWORK verbunden ist, dargestellt und weist neben Knoten MP, MAP des Mesh-Netzwerks auch nicht Mesh-Stationen, wie beispielsweise eine nach WLAN funktionierende Station STA auf. Diese nach WLAN funktionierende Station STA ist mit dem Mesh-Netzwerk MESH über einen Mesh-Netzwerk-Knoten MAP, der als WLAN-Zugangspunkt, d.h. WLAN Access Point, arbeitet, verbunden.

Dabei kann das Mesh-Netzwerk MESH der WLAN-Station STA auch Zugang zu einem Infrastrukturnetzwerk INFRASTRUCTURE NETWORK, wie beispielsweise einem Firmennetz oder dem Internet ermöglichen.

Dabei erfolgt eine Authentisierung von Mesh-Knoten MP und/oder WLAN-Stationen STA beispielsweise unter Verwendung eines Authentisierungsservers AAA-Server (AS), wobei das Mesh-Netzwerk MESH in dem dargestellten Beispiel über eine Gateway-Komponente GW mit dem Infrastrukturnetzwerk INFRASTRUCTURE NETWORK gekoppelt ist.

In Figur 2 ist ein eigenständiges Mesh-Netzwerk MESH, wie es aus dem Stand der Technik bekannt ist, dargestellt. Dabei bedeutet eigenständig, dass das Mesh-Netzwerk MESH ausschließlich aus Mesh-Knoten MP gebildet wird.

Dabei kann es sich sowohl um Infrastrukturknoten als auch um so genannte Endbenutzerknoten, wie beispielsweise einem Notebook oder PDA handeln.

Figur 3 hingegen zeigt ein eigenständiges Mesh-Netzwerk mit einem Zugangspunkt MAP, wie es aus dem Stand der Technik bekannt ist, welcher es den nicht-mesh-fähigen Geräten, wie beispielsweise den dargestellten WLAN-Stationen STA erlaubt, sich am Netzwerk MESH anzumelden. Die dargestellten WLAN-Stationen STA nehmen jedoch nicht selbst am Mesh-Routing teil.

In den dargestellten Anordnungen gemäß dem Stand der Technik ist es dabei üblich, dass sich die Geräte mit einer so genannten MAC-Adresse (Media Access Control Ethernet ID) im Netzwerk identifizieren. Eine MAC-Adresse ist dabei die Schicht-2-Adresse eines Knotens zur Kommunikation in Kommunikationsnetzen basierend auf den IEEE 802 Standards, wie beispielsweise bei WLAN nach IEEE 802.11 und den gezeigten Mesh-Netzwerken MESH nach IEEE 802.11S. In der Regel ist diese Adresse global eindeutig mit der jeweiligen Hardware in Verbindung zu bringen.

Es ist jedoch bekannt, dass nicht vertrauenswürdige Teilnehmer ATTACKER MP fälschlicher Weise oder mit voller Absicht die MAC-Adresse eines vertrauenswürdigen Teilnehmers GOOD MP verwenden. Durch eine solche Manipulation, die auch als MAC Address Spoofing bekannt ist, kommt es zu Störungen der befallenen Netzwerke, beispielsweise zu Denial of Service (DoS) Attacken, die dadurch entstehen, dass das Opfer GOOD MP nicht mehr kommunizieren kann, weil seine Drahtlosverbindung (Wireless Link) nicht mehr gültig ist. Ferner kann an einem WLAN-Hotspot mit rein http browserbasierter Anmeldung die Kommunikationssitzung des vertrauenswürdigen Teilnehmers GOOD MP übernommen werden.

Aus Joshua Right Detecting Wireless LAN MAC Address Spoofing, 21.01.2003,
http://www.routesecure.net/content/downloads/pdf/wlan macspoo f detection.pdf sind Maßnahmen zum Erkennen dieses WLAN MAC Address Spoofings offenbart, bei denen zum einen eine Überprüfung erfolgt, ob eine den Herstellern exklusiv zugewiesene so genannte Organizationally Unique Identifier OUI (siehe http://standarcts.ieee.org/regauth/oui/oui.txt), die Teil der übermittelten MAC-Adresse ist, überhaupt einem Hersteller zugewiesen ist. Weiterhin können auch WLAN MAC-Sequenznummern eines Teilnehmers, die üblicherweise fortlaufend erhöht werden, ausgewertet werden, was derart erfolgt, dass sobald eine größere Lücke auftaucht, ein Indiz dafür besteht, dass der entsprechende MAC Frame von einer anderen Station (Angreifer) gesendet wurde.

Nachteilig hierbei ist, dass die Überprüfung der OUI nur greift, falls die MAC-Adresse zufällig generiert wird, aber nicht dann, wenn der Angreifer ATTACKER MP lediglich die MAC-Adresse eines anderen vertrauenswürdigen Teilnehmers GOOD MP verwendet. Ferner kann auch der Angreifer ATTACKER MP auch zufällig MAC-Adressen generieren, unter der Nebenbedingung, dass deren OUI zugewiesen ist.

Weiterhin ist aus der Patentanmeldung US 2006/0114863 eine Methode zur Absicherung von IEEE 802.11 Datenverkehr gegen das MAC Address Spoofing bekannt, bei der ein Schutz vor dem MAC Address Spoofing bei WLAN-Netzwerken derart erfolgt, dass eine Zuordnungstabelle von MAC-Adresse und einer bei der WLAN-Anmeldung verwendeten Benutzeridentität angelegt ist und bei nachfolgenden WLAN-Anmeldungen die verwendete MAC-Adresse sowie die Benutzeridentität mit dem in der Zuordnungstabelle vorhandenen Eintrag auf Übereinstimmung überprüft werden und im Negativfall die Anmeldung abgewiesen wird.

Der vorliegenden Erfindung liegt daher die Aufgabe zugrunde, ein verbessertes Verfahren sowie Anordnung zur Bereitstellung eines drahtlosen Mesh-Netzwerks anzugeben.

Diese Aufgabe wird ausgehend von dem Oberbegriff des Anspruchs 1 durch dessen kennzeichnende Merkmale sowie ausgehend vom Gattungsbegriff des Anspruchs 24 durch dessen kennzeichnende Merkmale gelöst.

Bei dem erfindungsgemäßen Verfahren zum Bereitstellen eines drahtlosen lokalen Netzwerks, bei dem nach dem IEEE 802.11 Standard und seinen Derivaten insbesondere IEEE 802.15 oder IEEE 802.16 ausgestaltete stationäre Kommunikationseinrichtungen sowie mobile Kommunikationseinrichtungen nach Art des Mesh als Subnetzwerk verbunden sind, wird seitens einer sich beim Subnetzwerk anmeldenden Kommunikationseinrichtung dem Subnetzwerk eine anmeldende MAC-Adresse übermittelt, ferner eine Überprüfung derart durchgeführt, dass die anmeldende MAC-Adresse mit den seitens des Subnetzwerks erreichbaren MAC-Adressen verglichen wird und im Fall, dass die anmeldende MAC-Adresse zu den erreichbaren MAC-Adressen disjunkt ist, die anmeldende Kommunikationseinrichtung als Station des Subnetzwerks verbunden wird, während für den Fall, dass die anmeldende MAC-Adresse im Subnetzwerk bereits erreichbar ist, eine Zulassungsprozedur derart durchgeführt wird, dass ein Verwenden der anmeldenden MAC-Adresse durch zwei unterschiedliche Kommunikationseinrichtungen innerhalb des Subnetzwerks unterbunden wird.

Ein Vorteil des erfindungsgemäßen Verfahrens ist die Immunisierung gegen Auswirkungen des MAC-Address-Spoofings, da diese erfindungsgemäße Vorgehensweise gezielt die Anmeldung unter einer MAC-Adresse, die bereits erreichbar ist, unterbindet, wobei dies im Vergleich zu aus dem Stand der Technik bekannten Ansätzen keine vorab zu speichernden Beziehungen zwischen Geräten und MAC-Adressen oder dergleichen notwendig ist.

Bei einer Weiterbildung der Erfindung wird dabei als Zulassungsprozedur eine Abweisung der anmeldenden Kommunikation durchgeführt. Hierbei handelt es sich um die einfachste Variante der Sicherstellung einer Vermeidung von MAC Address Spoofing, weil keinerlei zusätzliche Abfragen und Datenübermittlungen notwendig sind. Außerdem ist dies die schnellstmögliche Abwicklung einer Zulassungsprozedur.

Alternativ wird als Zulassungsprozedur eine Umsetzung der anmeldenden MAC-Adresse derart durchgeführt, dass innerhalb des Subnetzwerks der anmeldenden Kommunikationseinrichtung eine zu den erreichbaren MAC-Adressen disjunkte MAC-Adresse zugewiesen wird.

Hierdurch wird unabhängig von der jedem Gerät global eindeutig zugeordneten MAC-Adresse intern für die Subnetzwerke eine nur lokal für diese Subnetzwerke gültige MAC-Adresse zugewiesen und so das Spoofing vermieden, d.h. dass ein MAC-Address-Spoofing negative Auswirkungen auf die Funktion des Mesh-Subnetzwerks, insbesondere das Routing und Weiterleiten von Daten innerhalb des Mesh-Subnetzwerks, hat.

Vorzugsweise wird dabei die disjunkte MAC-Adresse seitens des Subnetzwerks generiert, da diese über die Information der vorhandenen MAC-Adressen verfügt bzw. der in dem lokalen Netzwerk geltenden Adressen. Dabei ist es auch von Vorteil, dass die disjunkte MAC-Adresse aufgrund einer Pseudo-Zufallsfolge insbesondere einer genau einmal erzeugten "Number Used Once, Nonce" generiert wird.

Ferner ist es von Vorteil, dass die disjunkte MAC-Adresse bei einer Weiterbildung zu global insbesondere seitens Organisationen wie gemäß der OUI zugewiesenen MAC-Adressen disjunkt gewählt wird. Hierdurch ist gewährleistet, dass es keine Kollisionen mit global zugeordneten MAC-Adressen gibt.

Vorzugsweise wird dabei das 41. Bit der disjunkten MAC-Adresse mit dem Wert 1 belegt, so dass die lokale Gültigkeit auf einfache Weise gekennzeichnet ist.

Eine weitere vorteilhafte Ausgestaltung der Erfindung besteht darin, als Zulassungsprozedur seitens der im Subnetzwerk eine Prüfung auf Identität der anmeldenden Kommunikationseinrichtung mit der über die der anmeldenden MAC-Adresse entsprechenden erreichbaren MAC-Adresse bestimmten ersten Kommunikationseinrichtung durchzuführen. Hierdurch kann ermittelt werden, ob die anmeldende Kommunikationseinrichtung eine bereits bekannte Kommunikationseinrichtung ist, die lediglich einen weiteren Link im Mesh-Netzwerk aufbauen will, was gemäß Mesh-Architektur auch gewährleistet werden soll und somit kein Fall von Spoofing, sondern ein legitimer Anmeldeversuch ist und daher zuzulassen wäre.

Dabei ist bei einer Weiterbildung die Identitätsprüfung derart durchzuführen, dass seitens des Subnetzwerkes eine erste Prüfinformation über eine zu der der anmeldenden MAC-Adresse entsprechenden erreichbaren MAC-Adresse bestimmten Kommunikationseinrichtung etablierten Route des Subnetzwerks an die erste Kommunikationseinrichtung übermittelt wird, ferner das Subnutzwerk an die erste Kommunikationseinrichtung eine Aufforderung zur Rücksendung der ersten Prüfinformation übermittelt sowie das Subnetzwerk das Rücksenden der ersten Prüfinformation über eine im Rahmen des Anmeldeversuchs der anmeldenden Station etablierten Route, d.h. über den aufzubauenden Link, des Subnetzwerks erwartet, im Anschluss hieran infolge eines Ausbleibens des Rücksendens ein Abweisen der anmeldenden Kommunikationseinrichtung erfolgt bzw. bei Eintreten des Rücksendens die Korrelation der der ersten Prüfinformation mit der zurückgesandten Prüfinformation überprüft wird und im Falle des Erreichens eines festgelegten Korrelationsgrades insbesondere bei Identität von erster Prüfinformation zurückgesandter Prüfinformation die anmeldende Kommunikationseinrichtung als Station des Subnetzwerks verbunden wird, andernfalls ebenfalls ein Abweisen der anmeldenden Kommunikationseinrichtung eingeleitet wird.

Hierdurch wird also ein Senden eines Prüfparameters vom Netzwerk an die bereits angemeldete Station über die schon vorhandene Route durchgeführt und ein Erwarten, dass dieser Prüfparameter über die neu aufzubauende Route zurückgesendet wird, realisiert, was nur dann erfolgreich abgeschlossen wird, wenn es sich bei dem Gerät, das sich anmeldet, um das gleiche Gerät handelt, welches bereits unter der erreichbaren MAC-Adresse im Netz eingebunden ist.

Eine weitere Variante der Identitätsprüfung erfolgt derart, dass seitens des Subnetzwerks eine erste Prüfinformation über eine im Rahmen des Anmeldeversuchs der anmeldenden Station etablierte Route des Subnetzwerks an die erste Kommunikationseinrichtung übermittelt wird, das Subnetzwerk an die erste Kommunikationseinrichtung eine Aufforderung zur Rücksendung der ersten Prüfinformation übermittelt, das Subnetzwerk das Rücksenden der ersten Prüfinformation über eine zu der anmeldenden MAC-Adresse entsprechenden erreichbaren MAC-Adresse bestimmten Kommunikationseinrichtung etablierten Route des Subnetzwerks erwartet, ferner bei Ausbleiben des Rücksendens ein Abweisen der anmeldenden Kommunikationseinrichtung erfolgt, während bei Eintreten des Rücksendens im Falle der die Korrelation der ersten Prüfinformation mit der zurückgesandten Prüfinformation überprüft wird, so dass im Fall des Erreichens eines festgelegten Korrelationsgrades, insbesondere bei Identität von erster Prüfinformation zu zurückgesandter Prüfinformation die anmeldende Kommunikationseinrichtung als Station des Subnetzwerks verbunden wird, andernfalls ein Abweisen der anmeldenden Kommunikationseinrichtung erfolgt. Hierbei handelt es sich um eine Variante, bei der der Prüfparameter vom Netzwerk an die sich gerade anmeldende Station gesandt wird, wobei die neu aufzubauende Route hierfür genutzt wird und im Anschluss hieran, das Netzwerk erwartet, dass der Prüfparameter über die bereits vorhandene Route zurückgesandt wird. Auch dies kann nur erfolgen, wenn anmeldendes Gerät und bereits erreichbares Gerät identisch sind und somit beide Routen zu ihm führen, so dass auch hier eine sichere Verifikation der Identität von anmeldender und bereits erreichbarer Station gewährleistet ist.

Vorzugsweise initiiert das Subnetzwerk die Übertragung der zweiten und/oder dritten Prüfinformation oder alternativ hierzu erfolgt die Übertragung der zweiten und/oder dritten Prüfinformation seitens der anmeldenden Kommunikationseinrichtung automatisch.

Eine weitere Variante zur Identitätsprüfung besteht darin, dass eine seitens der durch die anmeldende MAC-Adresse entsprechende erreichbare MAC-Adresse bestimmten ersten Kommunikationseinrichtung authentisierenden kryptographischen Schlüssels insbesondere eines aus einer gemäß dem so genannten "Extensible Authentication Protocol EAP"-Protokoll Netzanmeldung resultierenden der anmeldenden Kommunikationseinrichtung verfügbaren ersten Sitzungsschlüssels berechnete vierte Prüfinformation über eine im Rahmen des Anmeldeversuchs der anmeldenden Station etablierte Route des Subnetzwerks an das Subnetzwerk übermittelt wird, ferner seitens des Subnetzwerks unter Zuhilfenahme eines auf Grundlage eines zweiten durch die der anmeldenden MAC-Adresse entsprechenden erreichbaren MAC-Adresse bestimmten Kommunikationseinrichtung authentisierenden kryptographischen Schlüssels insbesondere eines aus einer gemäß dem "Extensible Autentication Protocol EAP"-Protokoll Netzanmeldung resultierenden dem Subnetzwerk verfügbaren zweiten Sitzungsschlüssels die Gültigkeit der vierten Prüfinformation ermittelt wird, bei gegebener Gültigkeit die anmeldende Kommunikationseinrichtung als Station des Subnetzwerks verbunden wird, andernfalls ein Abweisen der anmeldenden Kommunikationseinrichtung erfolgt.

Alternativ erfolgt die Identitätsprüfung derart, dass seitens der anmeldenden Kommunikationseinrichtung auf Grundlage eines ersten die anmeldende Kommunikationseinrichtung authentisierenden kryptographischen Schlüssels insbesondere eines aus einer gemäß dem so genannten "Extensible Authentication Protocol EAP"-Protokoll Netzanmeldung resultierenden der anmeldenden Kommunikationseinrichtung verfügbaren ersten Sitzungsschlüssels berechnete fünfte Prüfinformation über eine zu der der anmeldenden MAC-Adresse entsprechenden erreichbaren MAC-Adresse bestimmten Kommunikationseinrichtung etablierten Route an das Subnetzwerk übermittelt, ferner seitens des Subnetzwerks unter Zuhilfenahme eines auf Grundlage eines zweiten die anmeldende Kommunikationseinrichtung authentisierenden kryptographischen Schlüssels ist insbesondere eines aus gemäß dem "Extensible Authentication Protocol EAP"-Protokoll Netzanmeldung resultierenden dem Subnetzwerk verfügbaren zweiten Sitzungsschlüssels die Gültigkeit der Prüfinformation ermittelt wird, bei gegebener Gültigkeit die anmeldende Kommunikationseinrichtung als Station des Subnetzwerks verbunden wird, andernfalls ein Abweisen der anmeldenden Kommunikationseinrichtung erfolgt.

Durch diese beiden Varianten ist eine besonders sichere Verifikation der Identität möglich, da dies auf den jeweiligen Kommunikationseinrichtungen bzw. den zu ihnen bestehenden und respektive neu aufzubauenden Links zugeordneten Verschlüsselungsinformationen erfolgt.

Dabei wird vorzugsweise der erste und/oder der zweite Sitzungsschlüssel als gemäß dem "Extensible Authentication Protocol EAP"-Protokoll gebildeten Master Session Key, MSK erzeugt, so dass das erfindungsgemäße Verfahren in übliche EAP Umgebungen bzw. auf diese basierend implementiert werden kann.

Alternativ bzw. ergänzend hierzu können auch der erste und/oder der zweite Sitzungsschlüssel als gemäß dem "Extensible Authentication Protocol EAP"-Protokoll gebildeten "Extended Master Session Key, EMSK" Schlüssel erzeugt werden.

Zur Berechnung der ersten, zweiten, dritten, vierten und/oder fünften Prüfinformation eignet sich dabei eine Funktion gemäß einer kryptographischen Hash-Funktion, insbesondere der SHA-1, SHA-256 oder MD5 Hash-Funktion, da hier auf bekannte Routinen zurückgegriffen werden kann.

Alternativ bzw. ergänzend ist es von Vorteil, wenn zur Berechnung der ersten, zweiten, dritten, vierten und/oder fünften Prüfinformation "Keyed Hash-Funktionen", wie insbesondere die EAS-CBC-MAC, HMAC-SHA1, HMAC-SHC256, HMAC-MD5 verwendet wird, wobei die HMAC-Funktionen nach RFC2104 definiert sind.

Bei einer vorteilhaften Ausgestaltung wird die Zulassungsprozedur initiiert, wenn die anmeldende Kommunikationseinrichtung sich als Teilnehmer nach Art des Mesh beim Subnetzwerk anmeldet, so dass zwischen Mesh-Teilnehmern und Nicht-Mesh-Teilnehmern unterschieden und entsprechende Varianten des erfindungsgemäßen Verfahrens eingesetzt werden können.

Bei einer weiteren vorteilhaften Ausgestaltung wird die erste, zweite, dritte, vierte und/oder fünfte Prüfinformation als ein insbesondere als Pseudo-Zufallscode, wie beispielsweise ein Nonce-Wert erzeugt.

Alternativ oder ergänzend hierzu wird bei einer weiteren vorteilhaften Ausgestaltung die erste, zweite, dritte, vierte und/oder fünfte Prüfinformation als ein aus einem insbesondere als Pseudo-Zufallscode, wie beispielsweise ein Nonce erzeugten Wert generierter Hash-Code übermittelt. Hierdurch werden eine zusätzliche Sicherung sowie ein erhöhter Verifikationsgrad erreicht.

Bei einer weiteren alternativen bzw. ergänzenden Ausgestaltung wird als die erste, zweite, dritte, vierte und/oder fünfte Prüfinformation ein aus einem Betriebsparameter der anmeldenden Kommunikationseinrichtung und/oder ersten Kommunikationseinrichtung generierter Hash-Code übermittelt. Vorteilhaft dabei ist, dass auf bekannte Parameter zurückgegriffen werden kann, so dass kein Parameter generiert werden muss und zugleich besteht aufgrund der engen Kopplung dieser Parameter mit dem Endgerät eine einfache Identifikationsmöglichkeit desselben.

Die der Erfindung zugrunde liegende Aufgabe wird ferner durch die Anordnung zum Bereitstellen des drahtlosen lokalen Netzwerks gelöst, welches sich durch Mittel zur Durchführung des Verfahrens auszeichnet.

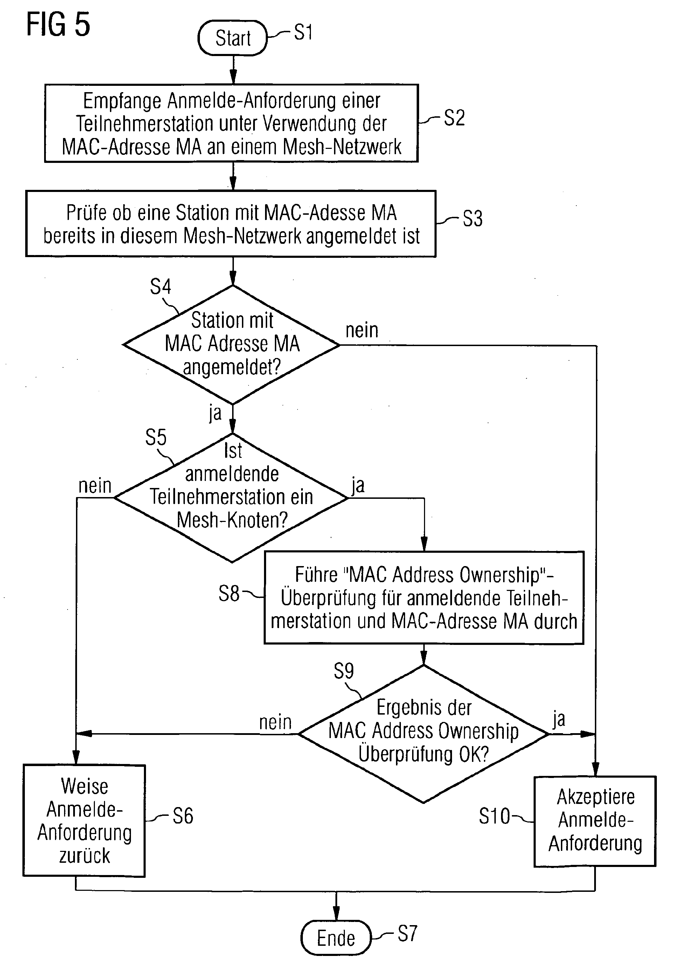

Weitere Einzelheiten und Vorteile der Erfindung sollen ausgehend vom in den Figuren 1 bis 4 dargestellten Stand der Technik anhand von in den Figuren 5 bis 12 dargestellten Ausführungsbeispielen näher erläutert werden. Dabei zeigt
- Figur 1: ein Mesh-Netzwerk Szenario nach dem Stand der Technik,

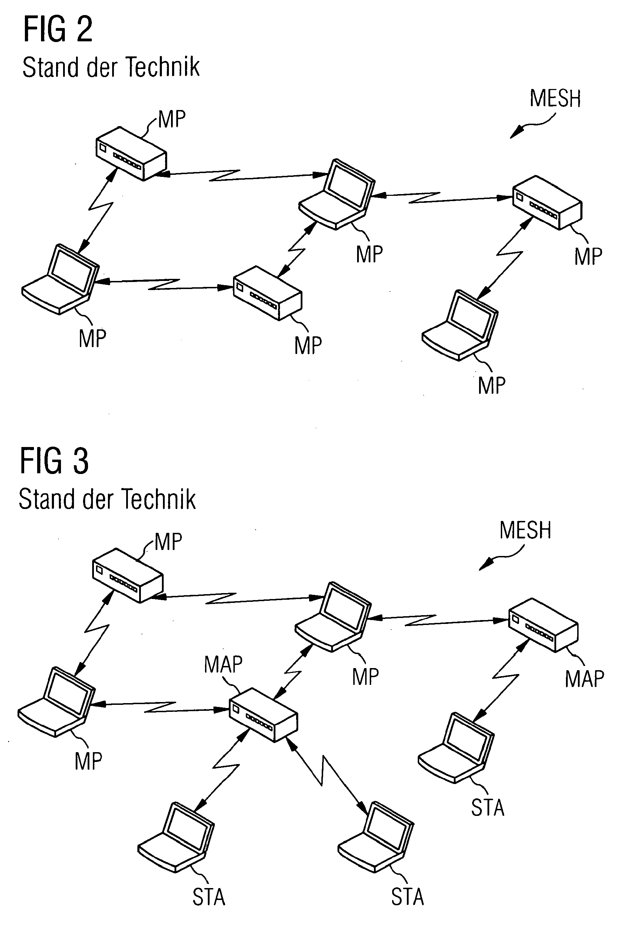

- Figur 2: ein eigenständiges Mesh-Netzwerk nach dem Stand der Technik,
- Figur 3: ein Mesh-Netzwerk nach dem Stand der Technik mit einem Zugangspunkt für Nicht-Mesh-Teilnehmerstationen,

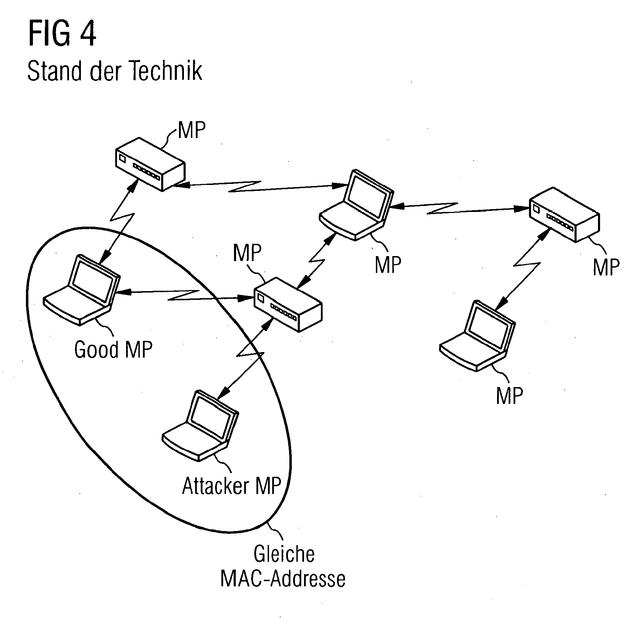

- Figur 4: ein Szenario einer Mesh-Ownership-Überprüfung gemäß dem Stand der Technik,
- Figur 5: ein Ablaufdiagramm eines Ausführungsbeispiels der Erfindung,

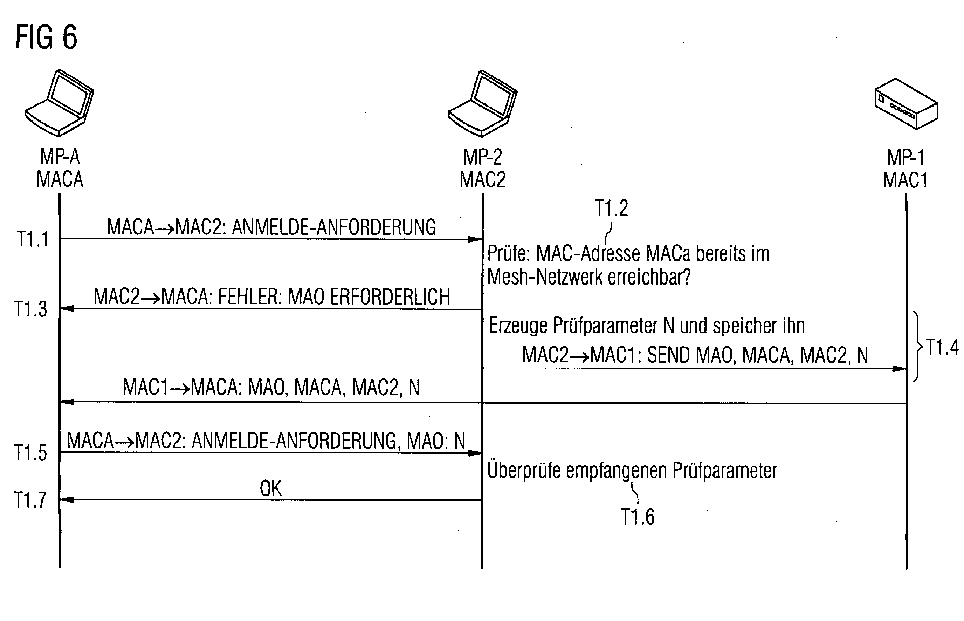

- Figur 6: ein Nachrichtenflussdiagramm zu einer ersten Variante zur erfindungsgemäßen Mesh-Ownership-Überprüfung,

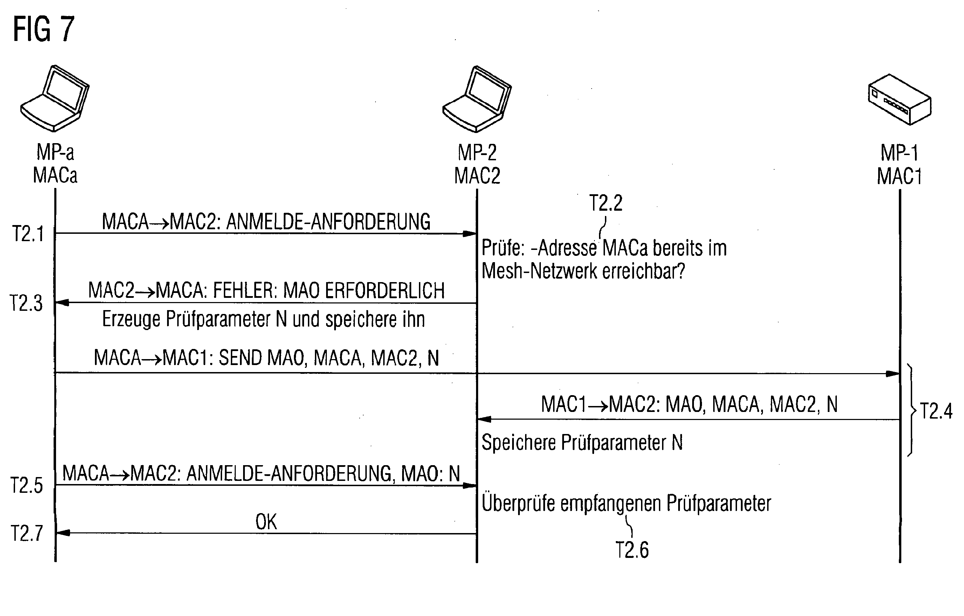

- Figur 7: ein Nachrichtenflussdiagramm zu einer zweiten Variante zur erfindungsgemäßen Mesh-Ownership-Überprüfung,

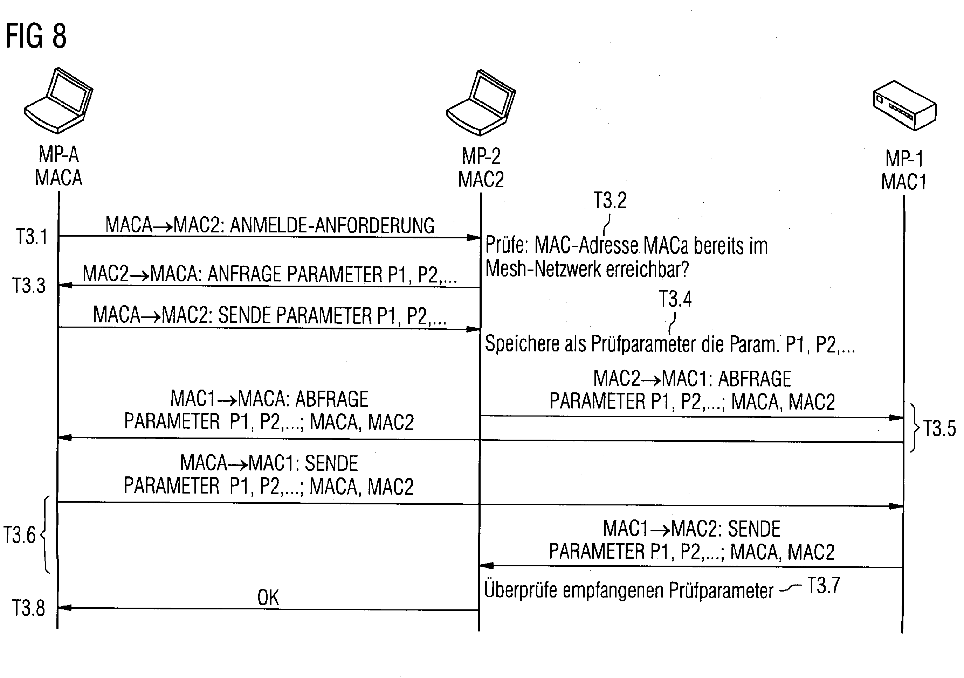

- Figur 8: ein Nachrichtenflussdiagramm zu einer dritten Variante zur erfindungsgemäßen Mesh-Ownership-Überprüfung,

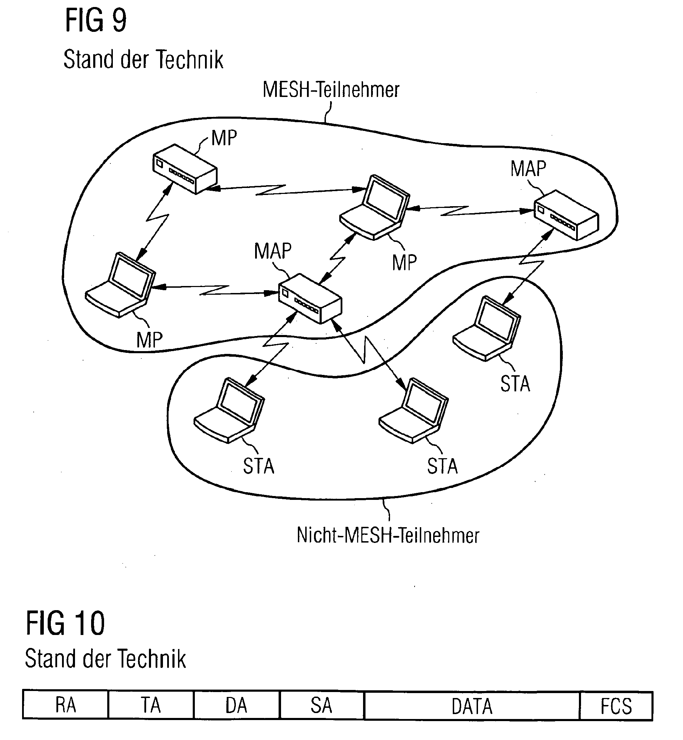

- Figur 9: ein Szenario mit über Mesh-Zugangspunkte angeschlossenen Nicht-Mesh-Teilnehmerstationen nach dem Stand der Technik,
- Figur 10: ein MAC-Datenframe gemäß dem Stand der Technik,

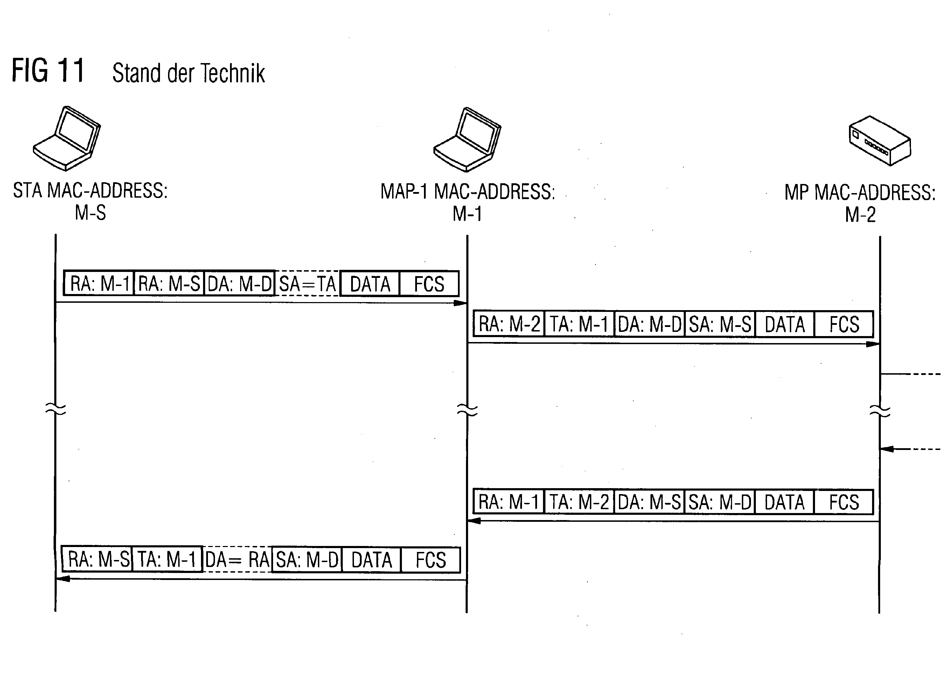

- Figur 11: ein Ablaufdiagramm einer Weiterleitung von MeshDatenframes gemäß dem Stand der Technik,

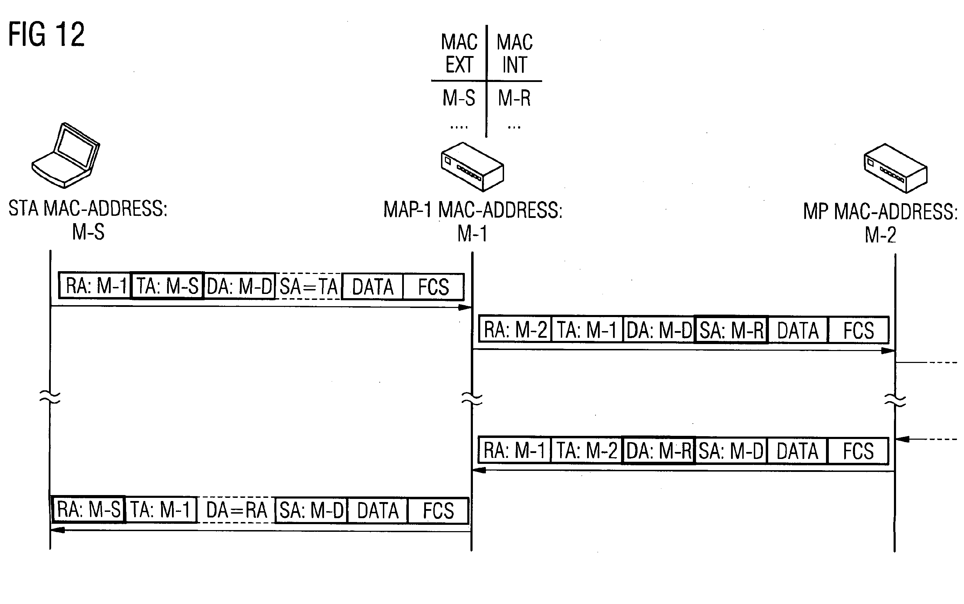

- Figur 12: ein Ablaufdiagramm mit erfindungsgemäßer Adressumsetzung ausgehend von den Szenarien gemäß dem Stand der Technik.

Ausgehend von den in den Figuren 1 bis 4 dargestellten Szenarien und den sich ergebenden Problemen greift die Erfindung vorteilhaft ein und löst die genannten Probleme für ein Mesh-Netzwerk, wie in dem Ausführungsbeispiel gemäß Figur 5 anhand eines das Ausführungsbeispiel aufzeigenden Ablaufdiagramms dargestellt.

Dabei geht die erfindungsgemäß ausgestaltete Verfahrensweise ausgehend von einem ersten Schritt S1, welcher einen Ausgangszustand START wiedergibt, nach Erhalt eines Ereignisses, nämlich dem Empfang einer Anmeldeaufforderung einer Teilnehmerstation unter Verwendung der MAC-Adresse MA an einem Mesh-Netzwerk in einem zweiten Schritt S2 über in einen dritten Schritt S3, bei dem geprüft wird, ob bereits eine Station mit der übertragenen MAC-Adresse MA bereits in dem Mesh-Netzwerk angemeldet ist.

Diese in einem vierten Schritt S4 durchgeführte Überprüfung führt, falls es sich um eine bereits angemeldete erreichbare MAC-Adresse MA handelt, in eine weitere Abfrage in einem fünften Schritt S5, bei dem geprüft wird, ob die anmeldende Teilnehmerstation ein Mesh-Knoten, d.h. ein Mesh-Teilnehmer oder eine Nicht-Mesh-Station ist. Dabei erfolgt in einem sechsten Schritt S6 eine Zurückweisung der Anmeldeanforderung, soweit es sich um eine Nicht-Mesh-Station handelt. Anderenfalls, d.h. im Falle, dass es ein Mesh-Knoten ist, erfolgt in einem achten Schritt S8 eine Überprüfung im Sinne einer MAC Address Ownership-Überprüfung für anmeldende Teilnehmerstation und MAC-Adresse MA. Bei dieser MAC Address Ownership-Überprüfung wird überprüft, ob die Teilnehmerstation berechtigt ist, die übertragene MAC-Adresse MA zu verwenden.

Ergibt die Abfrage, dass das Ergebnis der MAC Address Ownership-Überprüfung OK ist, d.h., wenn es sich um eine bereits angemeldete Teilnehmerstation handelt, erfolgt in einem zehnten Schritt S10 ein Akzeptieren der Anmeldeaufforderung und die Teilnehmerstation kann diesen Link aufbauen. Anderenfalls erfolgt wiederum eine gemäß dem sechsten Schritt S6 durchgeführte Zurückweisung der Anmeldeaufforderung, so dass das erfindungsgemäße Verfahren in einem siebten Schritt S7 in einen Endzustand kehrt.

Ein Kern der Erfindung ist also, dass bei einem Netzwerkzugang eines Teilnehmers unter Verwendung einer MAC-Adresse zu einem Mesh-Netzwerk durch das Mesh-Netzwerk überprüft wird, ob bereits ein Teilnehmerknoten mit der von dem anmeldenden Teilnehmer verwendeten MAC-Adresse angemeldet ist und somit in diesem Netz erreichbar ist, wobei für den Fall, dass die MAC-Adresse in diesem Netzwerk noch nicht erreichbar ist, der anmeldende Teilnehmer akzeptiert wird, jedoch im Fall, dass ein Teilnehmer mit der MAC-Adresse erreichbar ist, in der oben beschriebenen Art reagiert wird.

Dabei existieren auch Alternativen zu der oben beschriebenen Zulassungsprozedur. Eine wäre beispielsweise, dass bei Detektion im vierten Schritt S4, dass es sich um eine bereits erreichbare MAC-Adresse handelt, sofort eine Abweisung des anmeldenden Teilnehmers erfolgt.

Eine weitere Alternative bzw. Ergänzung zu dem erläuterten Vorgehen im Rahmen der Zulassungsprozedur besteht darin, eine MAC Address Translation, d.h. eine Ersetzung von MAC-Adressen, durchzuführen, ähnlich wie sie beispielsweise auch bei der so genannten Network Address Translation von IP Adressen zur Umsetzung privater IP Adressen in öffentliche IP Adressen bekannt ist. Dabei wird jedoch jeweils eine erste MAC-Adresse in eine ihr zugeordnete zweite MAC-Adresse umgesetzt, wogegen bei einer Network Address Translation eine Umsetzung mehrerer privater IP Adressen auf die gleiche öffentliche IP-Adresse umgesetzt werden.

Erfindungsgemäß würde dabei die von der anmeldenden Teilnehmerstation angegebene MAC-Adresse bezüglich der Kommunikation innerhalb des Netzwerks durch eine freie MAC-Adresse ersetzt werden, wobei freie MAC-Adresse bedeutet, dass es sich um eine aktuell innerhalb des betreffenden Netzes nicht verwendeten MAC-Adresse handelt, sie also disjunkt ist zu den erreichbaren MAC-Adressen.

Dabei kann die ersetzende Adresse durch Pseudo-Zufallscodes generiert werden, wobei dies vorzugsweise auf einem MAC-Adressbereich beschränkt ist, bei welchem es sich nicht um einen gemäß OUI bestimmten Organisationen zugewiesenen Adressen handelt.

Dies lässt sich beispielsweise dadurch sicherstellen, dass das 41. Bit, das so genannte "U/L" für Universal/Local Bit der MAC-Adresse den Wert 1 hat, so dass diese MAC-Adresse eben nicht global eindeutig ist, sondern lokal administriert wird und somit auch nur dort eindeutig ist. Der Effekt ist dann der, dass einem anmeldenden Teilnehmer mit einer externen mehrdeutigen MAC-Adresse dadurch eindeutig eine intern eindeutige zugewiesen wird.

Für die in dem Ablaufdiagramm genannte Überprüfung des MAC Address Ownership bestehen einige Implementierungsvarianten, die im Folgenden näher erläutert werden sollen.

Der grundsätzliche Kerngedanke der MAC Address Ownership-Überprüfung ist, dass die sich anmeldende Station die Kenntnis eines MAC Ownership-Prüfparameters bei der Anmeldung nachweisen muss. Die Bedingung, die dabei eine Identitätsüberprüfung ermöglicht, ist, dass der Prüfparameter nur derselben Station bekannt ist, die bereits angemeldet und erreichbar ist.

Dabei kann dieser Prüfparameter eine pseudo-zufällig generierte Zahl sein, eine so genannte Nonce oder ein kryptographischer Wert, d.h. ein Wert, der mit Hilfe kryptographischer Verfahren und eines Schlüssels berechnet wurde oder ein anderer bekannter Parameter, wie beispielsweise eine Seriennummer oder ein Zählerwert sein.

Wenn nun die anmeldende Station die Kenntnis dieses Prüfparameters nachweist, wird sie akzeptiert. Dabei wird vorzugsweise dieser Nachweis durch Übertragung des Prüfparameters auf mindestens zwei verschiedenen Routen geführt. Eine Route ist dabei immer die gerade neu aufzubauende, während die andere aus den schon vorhandenen frei wählbar ist.

Implementierungsvarianten ergeben sich dabei aus unterschiedlichen Abläufen des Nachweises, die möglich sind.

Beispielsweise kann ein Ablauf derart erfolgen, dass der Prüfparameter vom Netzwerk an die bereits angemeldete Station über die schon vorhandene Route gesendet wird und im Anschluss hieran vom Netzwerk erwartet wird, dass der Prüfparameter über die neu aufzubauende Route zurückgesandt wird. Hierdurch ist also sichergestellt, dass anmeldende und bereits angemeldete Stationen identisch sind und lediglich die anmeldende Station eine weitere Route aufbauen will, wie es gemäß Mesh-Architektur grundsätzlich möglich ist, denn nur, wenn es sich um ein und dieselbe Station handelt, ist ein Rücksenden des Prüfparameters über die neu aufzubauende Route möglich. Ein Angreifer würde diese Information nicht besitzen.

Eine Variante hierzu besteht darin, dass der Prüfparameter vom Netzwerk an die sich gerade anmeldende Station über die neu aufzubauende Route gesandt wird und im Anschluss hieran, das Rücksenden des Prüfparameters über die bereits vorhandene Route erwartet wird. Dies ist also im Grunde lediglich eine Umkehrung der Übertragungsrichtungen.

Eine weitere Variante besteht darin, dass der Prüfparameter, wie z.B. die oben genannte pseudo-zufällig generierte Zufallszahl bzw. Nonce von der Station, die sich anmeldet, an das Netzwerk über die genannten zwei Routen, nämlich zum einen die neu aufzubauende und zum anderen die über eine schon vorher vorhandene Route an das Netzwerk übertragen wird. Das Netzwerk muss dann lediglich die Gleichheit der beiden über die verschiedenen Routen eingegangenen Parameter prüfen und im einfachsten Fall bei Identität bzw. bei einem hohen Maß an Korrelation der Prüfparameter entsprechend die anmeldende Station zulassen und bei Ungleichheit abweisen. Initiiert werden kann dabei das Senden durch die beteiligten Stationen ausgelöst werden oder aber es erfolgt ein Abfragen des Prüfparameters initiiert von der Netzwerkseite über die genannten zwei verschiedenen Routen.

Eine weitere Möglichkeit besteht darin, dass ein Prüfparameter unter Verwendung eines kryptographischen Schlüssels durch die sich gerade anmeldende Station erfolgt. Dies kann beispielsweise auf Grundlage eines aus einer EAP basierten Netzanmeldung resultierenden Master Session Key MSK erfolgen. Nach Berechnen erfolgt dann ein Senden des Prüfparameters über die bereits vorhandene Route an das Netzwerk, welches zum Quercheck unter Nutzung desselben Schlüssels eigens einen Prüfparameter berechnet und ihn mit dem empfangenen auf Identität prüft.

Analog hierzu kann die angemeldete Station Prüfparameter auf Grundlage des ihm zugeordneten kryptographischen Schlüssels berechnen und ihn über die gerade aufzubauende Route an das Netzwerk senden.

Kern der Ownership-Überprüfung ist daher
- Senden des Prüfparameters,
- Senden eines aus dem Prüfparameter abgeleiteten Werts, wie beispielsweise den Hash-Wert des Prüfparameters oder des Eingabewertes einer Hash-Funktion, die den Prüfparameter als Resultat liefert, wie beispielsweise SHA-1, SHA-256 oder MD5,
- Verwenden des Prüfparameters als Input zur Berechnung einer kryptographischen Prüfsumme, dem so genannten Message Authentication Code, wie beispielsweise HMAC-SHA1, HMAC-SHA256, HMAC-MD5 oder AES-CPC-MAC, und Senden des Resultats.

Die beiden ersten Varianten der Nachweisabläufe, d.h. ein Abweisen bzw. eine MAC-Adressumsetzung sind dabei dann von Vorteil, wenn bekannt ist, dass sich ein Teilnehmer nur einmal an diesem Netzwerk anmelden kann bzw. soll, wie beispielsweise es bei herkömmlichen WLAN-Stationen der Fall ist, während die dritte Variante, also die Ownership-Überprüfung dann sinnvoll eingesetzt werden kann, wenn ein Teilnehmer legitim mehrere Zugangslinks zu diesem Netzwerk aufrechterhalten kann, wie es beispielsweise für Mesh-Knoten innerhalb eines Mesh-Netzwerkes zugelassen ist.

Daher sieht auch eine Weiterbildung vor, dass unterschiedliche Arten von Teilnehmern unterschieden werden, für oben genannten Fall beispielsweise konkret zwischen Mesh-Teilnehmern und Nicht-Mesh-Teilnehmern, wobei einer Teilnehmerstation freigestellt ist, sich als Mesh-Teilnehmer oder Nicht-Mesh-Teilnehmer am Netzwerk anzumelden und wobei die Überprüfung dann derart durchgeführt wird, dass für den Fall, dass er sich als Nicht-Mesh-Teilnehmer anmeldet, erfindungsgemäß überprüft wird, dass auch kein anderer Teilnehmer mit der gleichen MAC-Adresse als Mesh-Teilnehmer am Netzwerk angemeldet ist. Auch kann überprüft werden, dass kein anderer Teilnehmer mit der gleichen MAC-Adresse als Nicht-Mesh-Teilnehmer am Netzwerk bereits angemeldet ist.

In Figur 6 ist eine detailliertere Darstellung einer ersten Variante der Ownership-Überprüfung in Form eines Nachrichtenflussdiagramms dargestellt.

Zu erkennen ist der Nachrichtenfluss zwischen einer sich anmeldenden Station MP-A, welche die MAC-Adresse MACA aufweist, an einem Mesh-Netzwerk, welches zumindest aus den Mesh-Knoten MP-1 und MP-2 besteht, wobei eine erste Station MP-1 eine erste MAC-Adresse MAC1 aufweist und die zweite Station MP-2 eine zweite MAC-Adresse MAC2 zu eigen hat.

Ein gemäß der Erfindung ergebender möglicher Nachrichtenablauf sich wie folgt darstellt.

Zu einem ersten Zeitpunkt T1.1 sendet die anmeldende Station MP-A eine Anmeldeanforderung zum Aufbau eines Links an einen Mesh-Knoten des Mesh-Netzwerks, in dem gewählten Beispiel eine zweite Station MP-2.

Hierauf wird zu einem Zeitpunkt T1.2 durch MP-2 geprüft, ob die MAC-Adresse der anmeldenden Station MACA bereits im Mesh-Netzwerk erreichbar ist, d.h. ob bereits ein Knoten mit dieser Adresse angemeldet ist. Bei dem dargestellten Beispiel soll angenommen werden, dass dies der Fall ist. Dabei könnte eine Überprüfung auf Vorhandensein einer bereits bestehenden erreichbaren Adresse dadurch erfolgen, dass die zweite Station MP-2 seine Routingtabellen nach einem Eintrag für die Anmelde-MAC-Adresse MACA durchsucht, oder es erfolgt durch eine so genannte Route Request Nachricht, die vorzugsweise mit einem Destination Only "Flag" für den Knoten mit der anmeldenden MAC-Adresse MACA ausgesendet wird, um eine eventuell vorhandene Route durch das Mesh-Netzwerk zu ermitteln.

Da hier im vorliegenden Fall die Anmelde-MAC-Adresse MACA bereits eine im Mesh-Netzwerk erreichbare Adresse darstellt, sendet die zweite Kommunikationseinrichtung MP-2 zu einem Zeitpunkt T1.3 eine Fehlernachricht an die anmeldende Station MP-A zurück, welche angibt, dass ein MAC Address Ownership-Nachweis MAO erforderlich ist, wobei diese Nachricht optional ist.

Ferner wird zu einem vierten Zeitpunkt T1.4 seitens der zweiten Kommunikationseinrichtung MP-2 ein Prüfparameter N, beispielsweise eine Pseudo-Zufallszahl erzeugt und gespeichert optional mit weiteren Daten, insbesondere der MAC-Adresse MACA der anmeldenden Station MP-A, um diese dann anschließend für den Ownership-Nachweis derart zu verwenden, dass die zweite Kommunikationseinrichtung MP-2 über eine erste Kommunikationseinrichtung MP-1 an die anmeldende Station MP-A diesen Prüfparameter als Nachricht sendet, wobei diese Nachricht zuerst an die erste Kommunikationseinrichtung MP-1 gesandt wird, welche sie dann an die anmeldende Station MP-A weiterleitet.

Neben dem Prüfparameter N enthält diese Nachricht dabei auch als Adressinformation die MAC-Adressen von der zweiten Kommunikationseinrichtung MP-2 und der anmeldenden Station MP-A, damit auch, falls die Nachricht über mehrere Zwischenknoten weitergeleitet wird, dennoch erfolgreich bei der anmeldenden Station MP-A eintrifft.

Nach Erhalt dieser Nachricht wird zu einem fünften Zeitpunkt T1.5 seitens der anmeldenden Kommunikationseinrichtung MP-A erneut eine Anmeldeanforderung zum Aufbau eines Links an die zweite Kommunikationseinrichtung MP-2 versandt, wobei diese im Gegensatz zu der zum ersten Zeitpunkt T1.1 versandten Aufforderung auch den Prüfparameter N enthält.

Hierauf kann dann zu einem sechsten Zeitpunkt T1.6 durch die zweite Kommunikationseinrichtung MP-2 der von der anmeldenden Station MP-A gesendete Prüfparameter N dahingehend überprüft werden, ob er mit dem gespeicherten übereinstimmt, welches in dem darstellten Szenario der Fall sein soll, so dass zu einem siebten Zeitpunkt T1.7 die zweite Kommunikationseinrichtung MP-2 an die anmeldende Kommunikationseinrichtung MP-A eine OK-Nachricht zur Bestätigung sendet und somit die anmeldende Station MP-A als Teilnehmerstation des Netzwerks zugelassen wird.

In Figur 7 ist nun eine weitere Variante dargestellt, bei der die alternative Realisierung des Nachweisablaufs darin besteht, dass die anmeldende Station MP-A selbst einen Prüfparameter N generiert, der von der zweiten Kommunikationseinrichtung MP-2 über den vorhandenen Link über die erste Kommunikationseinrichtung MP-1 abgefragt wird. Bei dem dargestellten Nachrichtenablaufdiagramm startet zu einem ersten Zeitpunkt T2.1 der Nachweisablauf derart, dass die anmeldende Station MP-A zunächst wie üblich eine Anmeldeanforderung zum Aufbau eines Links an die zweite Kommunikationseinrichtung MP-2 sendet.

Daraufhin prüft zu einem zweiten Zeitpunkt T2.2 die zweite Kommunikationseinrichtung MP-2, ob die MAC-Adresse, welche seitens der anmeldenden Kommunikationseinrichtung MP-A übertragen worden ist, d.h. die Anmeldeadresse MACA bereits im Mesh-Netzwerk erreichbar ist, d.h. ein Knoten mit dieser MAC-Adresse angemeldet ist. Auch in diesem Beispiel soll dies angenommen werden, wobei die Überprüfung, wie unter Figur 6 beschrieben, erfolgen könnte. Auch bei dieser Variante wird zu einem dritten Zeitpunkt T2.3 seitens der zweiten Kommunikationseinrichtung MP-2 eine Fehlernachricht an die anmeldende Kommunikationseinrichtung MP-A zurückgesandt, welche angibt, dass ein MAC Address Ownership-Nachweis MAO erforderlich ist, so dann in Abweichung zu der oben beschriebenen Variante die anmeldende Station MP-A selbst einen Prüfparameter N erzeugt, wie beispielsweise eine Pseudo-Zufallszahl und diese speichert. Um nun der zweiten Kommunikationseinrichtung MP-2 die Überprüfung zu ermöglichen, sendet die anmeldende Station MP-A über die erste Kommunikationseinrichtung MP-1 an die zweite Kommunikationseinrichtung MP-2 eine Nachricht, wobei diese zuerst an die erste Kommunikationseinrichtung MP-1 gesendet wird, welche sie dann an die zweite Kommunikationseinrichtung MP-2 weiterleitet und den Prüfparameter N, welcher durch die anmeldende Kommunikationseinrichtung MP-A erzeugt worden ist, enthält. Die Kommunikationseinrichtung speichert den empfangenen Prüfparameter N und optional weitere Daten, insbesondere die MAC-Adresse MACA der anmeldenden Station MP-A.

Zu einem fünften Zeitpunkt T2.5 sendet die anmeldende Kommunikationseinrichtung daraufhin erneut eine Anmeldeanforderung zum Aufbau eines Links an die zweite Kommunikationseinrichtung MP-2, wobei diese im Gegensatz zu der zum ersten Zeitpunkt T2.1 versandten Nachricht auch den Prüfparameter N enthält.

Daraufhin erfolgt zu einem sechsten Zeitpunkt T2.6, nachdem die zweite Kommunikationseinrichtung MP-2 die Nachricht von der anmeldenden Kommunikationseinrichtung MP-A erhalten hat, eine Überprüfung durch die zweite Kommunikationseinrichtung MP-2 dahingehend, ob der von der anmeldenden Kommunikationseinrichtung MP-A gesendete Prüfparameter mit dem über die erste Kommunikationseinrichtung MP-1 empfangenen Prüfparameter übereinstimmt, was in diesem Beispiel angenommen wird, so dass zu einem siebten Zeitpunkt T2.7 die zweite Kommunikationseinrichtung MP-2 an die anmeldende Kommunikationseinrichtung MP-A eine OK-Nachricht zur Bestätigung sendet und diese Teilnehmerstation dem Netzwerk zulässt.

Eine Alternative hierzu wäre seitens der anmeldenden Kommunikationseinrichtung MP-A bereits bei der ersten Anmeldung einen Prüfparameter in die Nachricht einzufügen, was zu einem fast identischen Ablauf führen würde, der sich nur dahingehend unterscheidet, dass die ersten beiden Nachrichten entfallen.

Bei den Prüfparametern kann es sich dabei insbesondere um pseudo-zufällig generierte Zufallszahlen (Nonce) handeln.

In Figur 8 ist eine weitere Variante dargestellt und am Beispiel eines Nachrichtenflussdiagramms erläutert, bei dem auf das Erzeugen eines Prüfparameters verzichtet wird und stattdessen auf einen seitens der anmeldenden Station MP-A vorhandenen Information, d.h. Parameter, zurückgegriffen wird, welcher seitens der zweiten Kommunikationseinrichtung MP-2 über beide Routen, d.h. einmal über die neu aufzubauende Route sowie über die bereits bestehende abgefragt wird.

Dabei ist ein Vorteil dieser Variante, dass beliebige Parameter abgefragt werden können, so dass dadurch eine Überprüfung ermöglicht wird, bei der die übliche Anmeldeprozedur selbst nicht geändert werden muss. Es genügt lediglich, wenn der anmeldenden Kommunikationseinrichtung MP-A zugeordnete Parameterwerte abfragbar sind.

Dabei kann es sich bei diesen Parametern insbesondere um Seriennummern der anmeldenden Kommunikationseinrichtung MP-A, den Typ, das Modell, die Softwareversion der genannten Kommunikationseinrichtung handeln, ferner kann es sich auch um Zählerwerte der anmeldenden Kommunikationseinrichtung MP-A handeln, wie beispielsweise Paketzähler, Sequenznummernzähler von Routing-Nachrichten, die spezielle Route Request Sequence Number der anmeldenden Kommunikationseinrichtung MP-A, d.h. es werden an ihm zwei Route Request-Anfragen über die beiden genannten Routen gestellt, auf die er mit der jeweils passenden, d.h. eng beieinander liegenden Sequenznummer antworten muss, wobei darauf zu achten wäre, dass bei der über den neu aufzubauenden Link bzw. die Route übertragene Route Request, d.h. derjenige keine Angaben über die "Destination Sequence Number" erfolgen, da ansonsten ein eventueller Angreifer-Knoten den aktuellen und damit erwarteten Wert lernen würde.

Bei der anschließenden Überprüfung würde dann getestet, ob die Werte identisch sind bzw. ob die Zählerwerte, welche unterschiedlich sein können, da die Abfragen ja auch zu unterschiedlichen Zeitpunkten stattfinden, hinreichend nah beieinander liegen. Hierzu wäre beispielsweise ein Schwellwertvergleich zu bevorzugen.

Die Nachrichten fließen dabei wie folgt.

Zu einem ersten Zeitpunkt T3.1 wird die bekannte Anmeldeanforderung seitens der anmeldenden Kommunikationseinrichtung MP-A, welche die Anmeldeadresse MACA enthält, an die zweite Kommunikationseinrichtung MP-2 gesandt, worauf diese prüft, ob die übertragene Anmeldeadresse MACA bereits im Mesh-Netzwerk erreichbar ist und zu einem dritten Zeitpunkt T3.3 eine Anfrage nach beliebigen Parametern an die anmeldende Station MP-A versendet, worauf die anmeldende Station MP-A hierauf die entsprechenden Parameter an die zweite Kommunikationseinrichtung MP-2 sendet, welche diese dann zu einem fünften Zeitpunkt T3.5 speichert und zu einem sechsten Zeitpunkt T3.6 eine Abfrage der gleichen Parameter über die erste Kommunikationseinrichtung MP-1 an die anmeldende Kommunikationseinrichtung MP-A versendet, woraufhin die anmeldende Kommunikationseinrichtung MP-A die geforderten Parameter über die erste Kommunikationseinrichtung MP-1 an die zweite Kommunikationseinrichtung MP-2 überträgt, so dass zu einem achten Zeitpunkt T3.8 die zweite Kommunikationseinrichtung MP-2 eine OK-Nachricht an die anmeldende Station MP-A übertragen kann und somit eine Zulassung dieser Station zum Netzwerk erfolgt.

Eine Alternative hierzu besteht darin, den Link gewissermaßen unter Vorbehalt aufzubauen. D.h. die OK-Nachricht würde direkt nach der Anmeldeanforderung gesendet und danach in einer Vorbehaltsphase die Prüfungen, wie oben dargestellt, durchgeführt, so dass, falls die Überprüfung negativ ausfällt, der direkte Link wieder abgebaut wird. Dabei wird vorzugsweise der direkte Link zwischen der anmeldenden Station MP-A und der zweiten Kommunikationseinrichtung MP-2 von der zweiten Kommunikationseinrichtung MP-2 für das Routing erst dann als Vorhanden behandelt, wenn die Überprüfung erfolgreich durchgeführt ist, d.h. nach der Vorbehaltsphase.

In Figur 9 ist nun ein Szenario dargestellt, bei dem durch das Mesh-Netzwerk, d.h. durch einen der Mesh Access Points MAP bei der Anmeldung eines Knotens als Nicht-Teilnehmer, d.h. beispielsweise als eine WLAN-Station STA an einem Mesh Access Point MAP geprüft wird, ob bereits innerhalb des Mesh-Netzes ein Mesh-Knoten angemeldet ist, der die gleiche MAC-Adresse verwendet, wie die anmeldende Station, welcher sich als Nicht-Mesh-Teilnehmer anmeldet.

Das besondere an diesem dargestellten Beispiel ist, dass nur die MAC-Adresse eines Knotens bei einer Anmeldung einer Station als Nicht-Mesh-Teilnehmer geprüft wird und nur eine Prüfung gegenüber denjenigen MAC-Adressen stattfindet, die zu einem Mesh-Knoten gehören, also einem Teilnehmer, der als Mesh-Teilnehmer angemeldet ist.

Hierdurch wird gewährleistet, dass kein Nicht-Mesh-Teilnehmer die MAC-Adresse eines Mesh-Knotens verwendet bzw. mit dieser MAC-Adresse innerhalb des Mesh-Netzwerkes sichtbar ist. Dabei ist erkennbar, dass ein Knoten kein Mesh-Teilnehmer ist, durch einen Eintrag in einer Tabelle mit einem gesetzten Flag, welches als "isProxied" (s. IEEE 802.11s D0.02 Abschnitt 11A.3.5.2 MP Proxy Table) bekannt ist, wogegen ein Mesh-Knoten, welcher zu einem Mesh-Teilnehmer gehört, in der Tabelle mit einem entsprechend nicht gesetzten Flag erfasst wäre.

Erfindungsgemäß könnten dabei folgende Maßnahmen ergriffen werden, wenn die Nicht-Mesh-Teilnehmerstation eine Adresse aufweist, welche gleich ist zu einer Mesh-Teilnehmerstation und zwar würde entweder die Anmeldung der entsprechenden Nicht-Mesh-Station abgewiesen oder die von der Nicht-Mesh-Station verwendete MAC-Adresse wird in eine freie MAC-Adresse übersetzt MAC Address Translation.

Dabei könnte in einer Variante die Prüfung derart erfolgen, dass ermittelt wird, ob die MAC-Adresse bereits in Benutzung ist, sowohl gegenüber Mesh-Teilnehmern wie gegenüber Nicht-Mesh-Teilnehmern, d.h. es wird geprüft, ob irgendein Knoten MP, MAP, STA unter dieser MAC-Adresse erreichbar ist.

Diese Variante ist insbesondere dann vorteilhaft, wenn keine Information verfügbar ist, ob ein Knoten mit einer bestimmten MAC-Adresse am Mesh-Routing selbst teilnimmt.

Die MAC-Adressumsetzung MAC Address Translation soll ausgehend von der Figur 10 und 11 näher erläutert werden.

Dabei zeigt Figur 10 den Aufbau eines nach IEEE 802.11 definierten MAC Frames, der gemäß dem Standard bis zu vier Adressfelder, so genannte MAC-Adressen, enthalten kann (vgl. auch IEEE 802.11 Abschnitt 7.2).

Dabei kann es sich um die
- so genannte Source Address SA,
- Destination Address DA,
- Transmitting Station Address TA
- oder so genannte Receiving Station Address RA
handeln.

Source Address SA bezeichnet dabei die Adresse des ursprünglichen Senders, während die Destination Address DA die Adresse des endgültigen Empfängerknotens angibt.

Im Allgemeinen werden jedoch innerhalb eines Mesh-Netzwerks Frames über mehrere Zwischenknoten weitergeleitet, so dass dafür die Adressfelder Transmitting Station Address TA und Receiving Station Address RA verwendet werden.

Dabei ist die Transmitting Station Address TA und die Receiving Station Address RA immer in diesem Frame enthalten, während die Source Address SA und die Destination Address DA nur dann befüllt sind, wenn sie benötigt werden, d.h. unterschiedlich zu der Transmitting Station Address TA oder der Receiving Station Address RA sind.

Daneben enthält das Data Frame prinzipiell auch noch ein Feld für Nutzdaten DATA sowie ein Feld mit der Prüfsumme FCS.

Weitere für die Erläuterung nicht relevante Header-Felder, wie Frame Control, Duration/ID oder Sequence Control sind dabei zur Vereinfachung nicht dargestellt worden.

Figur 11 verdeutlicht dabei den Einsatz dieser MAC Frames, wobei die jeweilige Befüllung selbst erklärend ist.

In Figur 12 ist schließlich, von diesem Stand der Technik ausgehend, die erfindungsgemäße Umsetzung der MAC-Adresse für den Fall einer bereits verwendeten bzw. erreichbaren Adresse dargestellt.

Zu erkennen ist, dass seitens eines MAC Access Points MAP-1 eine Umsetzung der MAC-Adresse M-S einer Nicht-Mesh-Teilnehmerstation STA in eine innerhalb des Mesh-Netzes nicht verwendete, z.B. pseudo-zufällig erzeugte MAC-Adresse M-R, mit "R" wie Random.

Die Umsetzung ist daher auch als Ersetzen der von der Nicht-Mesh-Teilnehmerstation STA angegebenen MAC-Adresse M-S zu werten, wobei von den Nicht-Mesh-Teilnehmerknoten STA kommenden MAC Frames die Umsetzung lediglich die Transmitter Address TA, welche identisch zur Source Address SA ist, betrifft und bei an den Nicht-Mesh-Teilnehmerknoten STA gerichteten MAC Frames die Receiver Address RA, welche identisch zur Destination Address DA ist.

Dargestellt ist auch die Zuordnungstabelle in dem Mesh Access Point, über welchen die Nicht-Mesh-Teilnehmerstation STA sich anmeldet. Zu erkennen ist dabei, dass diese Einträge enthält, mit der jeweils aufeinander abzubildende Mesh-Netz-externe MAC-Adressen (MAC EXT) zugeordnet zu den Mesh-Netz-internen MAC-Adressen (MAC INT) gespeichert sind.

Eine Variante hierbei ist, dass die genannte MAC-Adressumsetzung bzw. Translation stets stattfindet, d.h. unabhängig davon, ob die angegebene MAC-Adresse schon erreichbar ist oder nicht.

## Patentansprüche

1. Verfahren zum Bereitstellen eines drahtlosen lokalen Netzwerks, bei dem nach dem IEEE 802.11 Standard und seinen Derivaten, insbesondere IEEE 802.15 oder IEEE 802.16, ausgestaltete stationäre Kommunikationseinrichtungen (AP) sowie mobile Kommunikationseinrichtungen (STA, MAP, MP, MP-1, MP-2, MP-A) nach Art des Mesh als Subnetzwerk (MESH) verbunden sind, **dadurch gekennzeichnet, dass**
a) seitens einer sich beim Subnetzwerk (MESH) anmeldende Kommunikationseinrichtung (MP-A) dem Subnetzwerk eine anmeldende MAC-Adresse (MAC-A) übermittelt wird,
b) eine Überprüfung derart durchgeführt wird, dass die anmeldende MAC-Adresse mit den seitens des Subnetzwerks (MESH) erreichbaren MAC-Adressen (MP-1, MP-2) verglichen wird,
c) im Fall, dass die anmeldende MAC-Adresse (MAC-A) zu den erreichbaren MAC-Adressen (MAC-1, MAC-2) disjunkt ist, die anmeldende Kommunikationseinrichtung (MP-A) als Station des Subnetzwerks (MESH) verbunden wird,
d) im Fall, dass die anmeldende MAC-Adresse (MAC-A) im Subnetzwerk (MESH) bereits erreichbar ist, eine Zulassungsprozedur derart durchgeführt wird, dass ein Verwenden der anmeldenden MAC-Adresse (MAC-A) (MESH) durch zwei unterschiedliche Kommunikationseinrichtungen innerhalb des Subnetzwerks (MESH) unterbunden wird.

2. Verfahren nach Anspruch 1, **dadurch gekennzeichnet, dass** als Zulassungsprozedur eine Abweisung der anmeldenden Kommunikationseinrichtung (MP-A) erfolgt.

3. Verfahren nach Anspruch 1, **dadurch gekennzeichnet, dass** als Zulassungsprozedur eine Umsetzung der anmeldenden MAC-Adresse (MAC-A) derart erfolgt, dass innerhalb des Subnetzwerks (MESH) der anmeldenden Kommunikationseinrichtung (MP-A) eine zu den erreichbaren MAC-Adressen (MAC-1, MAC-2) disjunkte MAC-Adresse zugewiesen wird.

4. Verfahren nach dem vorhergehenden Anspruch, **dadurch gekennzeichnet, dass** die disjunkte MAC-Adresse seitens des Subnetzwerkes (MESH) generiert wird.

5. Verfahren nach dem vorhergehenden Anspruch, **dadurch gekennzeichnet, dass** die disjunkte MAC-Adresse auf Grundlage einer Pseudo-Zufallsfolge, insbesondere einer genau einmal erzeugten "Number Used Once, Nonce", generiert wird.

6. Verfahren nach einem der Ansprüche 3 bis 5, **dadurch gekennzeichnet, dass** die disjunkte MAC-Adresse auch zu global, insbesondere seitens Organisationen wie gemäß der OUI, zugewiesenen MAC-Adressen disjunkt gewählt wird.

7. Verfahren nach einem der vorhergehenden Ansprüche, **dadurch gekennzeichnet, dass** Bit 41 der disjunkten MAC-Adresse mit dem Wert "1" belegt wird.

8. Verfahren nach Anspruch 1, **dadurch gekennzeichnet, dass** als Zulassungsprozedur seitens des Subnetzwerks (MESH) eine Prüfung auf Identität der anmeldenden Kommunikationseinrichtung (MP-A) mit der über die der anmeldenden MAC-Adresse (MAC-A) entsprechenden erreichbaren MAC-Adresse (MAC-1, MAC-2) bestimmten ersten Kommunikationseinrichtung (MP-1, MP-2) erfolgt.

9. Verfahren nach dem vorhergehenden Anspruch, **dadurch gekennzeichnet, dass** zur Identitätsprüfung
a) seitens des Subnetzwerks (MESH) eine erste Prüfinformation über eine zu der der anmeldenden MAC-Adresse (MAC-A) entsprechenden erreichbaren MAC-Adresse (MAC-1, MAC-2) bestimmten Kommunikationseinrichtung (MP-1, MP-2) etablierten Route des Subnetzwerks (MESH) an die erste Kommunikationseinrichtung (MP-1, MP-2) übermittelt wird,
b) das Subnetzwerk (MESH) an die erste Kommunikationseinrichtung (MP-1, MP-2) eine Aufforderung zur Rücksendung der ersten Prüfinformation übermittelt,
c) das Subnetzwerk (MESH) das Rücksenden der ersten Prüfinformation über eine im Rahmen des Anmeldeversuchs der anmeldenden Station etablierte Route des Subnetzwerks (MESH) erwartet,
d) bei Ausbleiben des Rücksendens ein Abweisen der anmeldenden Kommunikationseinrichtung (MP-A) erfolgt,
e) bei Eintreten des Rücksendens die Korrelation der der ersten Prüfinformation mit der rückgesandten Prüfinformation überprüft wird,
f) im Falle der des Erreichens eines festgelegten Korrelationsgrades, insbesondere bei Identität, von erster Prüfinformation zu rückgesandter Prüfinformation die anmeldende Kommunikationseinrichtung (MP-A) als Station des Subnetzwerks (MESH) verbunden wird, andernfalls ein Abweisen der anmeldenden Kommunikationseinrichtung erfolgt.

10. Verfahren nach dem Anspruch 8, **dadurch gekennzeichnet, dass** zur Identitätsprüfung
a) seitens des Subnetzwerks (MESH) eine erste Prüfinformation über eine im Rahmen des Anmeldeversuchs der anmeldenden Station etablierte Route des Subnetzwerks (MESH) an die erste Kommunikationseinrichtung (MP-1, MP-2) übermittelt wird,
b) das Subnetzwerk (MESH) an die erste Kommunikationseinrichtung (MP-1, MP-2) eine Aufforderung zur Rücksendung der ersten Prüfinformation übermittelt,
c) das Subnetzwerk (MESH) das Rücksenden der ersten Prüfinformation über eine zu der der anmeldenden MAC-Adresse (MAC-A) entsprechenden erreichbaren MAC-Adresse (MAC-1, MAC-2) bestimmten Kommunikationseinrichtung (MP-1, MP-2) etablierten Route des Subnetzwerks (MESH) erwartet,
d) bei Ausbleiben des Rücksendens ein Abweisen der anmeldenden Kommunikationseinrichtung (MP-A) erfolgt,
e) bei Eintreten des Rücksendens im Falle der die Korrelation der der ersten Prüfinformation mit der rückgesandten Prüfinformation überprüft wird,
f) im Falle der des Erreichens eines festgelegten Korrelationsgrades, insbesondere bei Identität, von erster Prüfinformation zu rückgesandter Prüfinformation die anmeldende Kommunikationseinrichtung (MP-A) als Station des Subnetzwerks (MESH) verbunden wird, andernfalls ein Abweisen der anmeldenden Kommunikationseinrichtung erfolgt.

11. Verfahren nach dem Anspruch 8, **dadurch gekennzeichnet, dass** zur Identitätsprüfung
a) seitens des Subnetzwerks (MESH) eine zweite Prüfinformation über eine zu der der anmeldenden MAC-Adresse (MAC-A) entsprechenden erreichbaren MAC-Adresse (MAC-1, MAC-2) bestimmten Kommunikationseinrichtung (MP-1, MP-2) etablierten Route des Subnetzwerks (MESH) sowie eine dritte Prüfinformation über eine im Rahmen des Anmeldeversuchs der anmeldenden Station etablierte Route des Subnetzwerks (MESH) an die erste Kommunikationseinrichtung (MP-1, MP-2) erwartet wird,
b) bei Ausbleiben der zweiten und/oder dritten Prüfinformation ein Abweisen der anmeldenden Kommunikationseinrichtung (MP-A) erfolgt,
c) bei Eintreffen der zweiten und dritten Prüfinformation eine im Falle ihrer die Korrelation der zweiten Prüfinformation mit der dritten Prüfinformation überprüft wird,
d) im Falle der des Erreichens eines festgelegten Korrelationsgrades, insbesondere bei Identität, von zweiter Prüfinformation zu dritter Prüfinformation die anmeldende Kommunikationseinrichtung (MP-A) als Station des Subnetzwerks (MESH) verbunden wird, andernfalls ein Abweisen der anmeldenden Kommunikationseinrichtung erfolgt.

12. Verfahren nach dem vorhergehenden Anspruch, **dadurch gekennzeichnet, dass** die Übertragung der zweiten und/oder dritten Prüfinformation seitens des Subnetzwerks (MESH) initiiert wird.

13. Verfahren nach dem Anspruch 11, **dadurch gekennzeichnet, dass** die Übertragung der zweiten und/oder dritten Prüfinformation seitens der anmeldenden Kommunikationseinrichtung (MP-A) initiiert wird.

14. Verfahren nach Anspruch 8, **dadurch gekennzeichnet, dass** zur Identitätsprüfung
a) eine seitens der anmeldenden Kommunikationseinrichtung (MP-A) auf Grundlage eines ersten die anmeldende Kommunikationseinrichtung (MP-A) authentisierenden kryptografischen Schlüssels, insbesondere eines aus einer gemäß dem so genannten "Extensible Authentication Protocol, EAP"-Protokoll Netzanmeldung resultierenden, der anmeldenden Kommunikationseinrichtung (MP-A) verfügbaren ersten Sitzungsschlüssels, berechnete vierte Prüfinformation über eine im Rahmen des Anmeldeversuchs der anmeldenden Station etablierte Route des Subnetzwerks (MESH) an das Subnetzwerk (MESH) übermittelt wird,
b) seitens des Subnetzwerks (MESH) unter Zuhilfenahme eines auf Grundlage eines zweiten durch die der anmeldende MAC-Adresse (MACA) entsprechenden erreichbaren MAC-Adresse (MAC-1, MAC-2) bestimmten Kommunikationseinrichtung (MP-1, MP-2) authentisierenden kryptografischen Schlüssels, insbesondere eines aus einer gemäß dem "Extensible Authentication Protocol, EAP"-Protokoll Netzanmeldung resultierenden, dem Subnetzwerk (MESH) verfügbaren zweiten Sitzungsschlüssels, ein Entschlüsselungsversuch durchgeführt wird,
c) bei erfolgreicher Entschlüsselung die anmeldende Kommunikationseinrichtung (MP-A) als Station des Subnetzwerks (MESH) verbunden wird, andernfalls ein Abweisen der anmeldenden Kommunikationseinrichtung erfolgt.

15. Verfahren nach Anspruch 8, **dadurch gekennzeichnet, dass** zur Identitätsprüfung
a) eine seitens der durch die anmeldende MAC-Adresse (MAC-A) entsprechenden erreichbaren MAC-Adresse (MAC-1, MAC-2) bestimmten ersten Kommunikationseinrichtung (MP-1, MP-2) authentisierenden kryptografischen Schlüssels, insbesondere eines aus einer gemäß dem so genannten "Extensible Authentication Protocol, EAP"-Protokoll Netzanmeldung resultierenden, der anmeldenden Kommunikationseinrichtung (MP-A) verfügbaren ersten Sitzungsschlüssels, berechnete fünfte Prüfinformation über eine etablierte Route der anmeldenden Kommunikationseinrichtung (MP-A) an das Subnetzwerk (MESH) übermittelt,
b) seitens des Subnetzwerks (MESH) unter Zuhilfenahme eines auf Grundlage eines zweiten die anmeldende Kommunikationseinrichtung (MP-A) authentisierenden kryptografischen Schlüssels, insbesondere eines aus einer gemäß dem "Extensible Authentication Protocol, EAP"-Protokoll Netzanmeldung resultierenden, dem Subnetzwerk (MESH) verfügbaren zweiten Sitzungsschlüssels, ein Entschlüsselungsversuch durchgeführt wird,
c) bei erfolgreicher Entschlüsselung die anmeldende Kommunikationseinrichtung (MP-A) als Station des Subnetzwerks (MESH) verbunden wird, andernfalls ein Abweisen der anmeldenden Kommunikationseinrichtung erfolgt.

16. Verfahren nach einem der vorhergehenden Ansprüche, **dadurch gekennzeichnet, dass** der erste und/oder der zweite Sitzungsschlüssel als gemäß dem "Extensible Authentication Protocol, EAP"-Protokoll gebildeten "Master Session Key, MSK" Schlüssels erzeugt wird.

17. Verfahren nach einem der vorhergehenden Ansprüche, **dadurch gekennzeichnet, dass** der erste und/oder der zweite Sitzungsschlüssel als gemäß dem "Extensible Authentication Protocol, EAP"-Protokoll gebildeten "Extended Master Session Key, EMSK" Schlüssels erzeugt wird.

18. Verfahren nach einem der vorhergehenden Ansprüche, **dadurch gekennzeichnet, dass** zur Berechnung der ersten, zweiten, dritten, vierten und/oder fünften Prüfinformation eine Funktion gemäß einer kryptographischen, insbesondere SHA-1, SHA256 oder MD5, Hash-Funktion verwendet wird.

19. Verfahren nach dem vorhergehenden Anspruch, **dadurch gekennzeichnet, dass** zur Berechnung der ersten, zweiten, dritten, vierten und/oder fünften Prüfinformation "Keyed-Hash-Funktionen", insbesondere AES-CBC-MAC, HMAC-SHA1, HMAC-SHA256, HMAC-MD5 mit HMAC nach RFC2104, verwendet werden.

20. Verfahren nach dem vorhergehenden Anspruch, **dadurch gekennzeichnet, dass** die Zulassungsprozedur initiiert wird, wenn die anmeldende Kommunikationseinrichtung (MP-A) sich als Teilnehmer nach Art des Mesh beim Subnetzwerk (MESH) anmeldet.

21. Verfahren nach einem der vorhergehenden Ansprüche, **dadurch gekennzeichnet, dass** die erste, zweite, dritte, vierte und/oder fünfte Prüfinformation als ein, insbesondere als Pseudo-Zufallscode wie beispielsweise ein "Nonce", Wert erzeugt wird.

22. Verfahren nach einem der vorhergehenden Ansprüche, **dadurch gekennzeichnet, dass** als die erste, zweite, dritte, vierte und/oder fünfte Prüfinformation ein aus einem, insbesondere als Pseudo-Zufallscode wie beispielsweise ein "Nonce", erzeugtem Wert generierter Hash-Code übermittelt wird.

23. Verfahren nach einem der vorhergehenden Ansprüche, **dadurch gekennzeichnet, dass** als die erste, zweite, dritte, vierte und/oder fünfte Prüfinformation ein aus einem Betriebsparameter der anmeldenden Kommunikationseinrichtung (MP-A) und/oder ersten Kommunikationseinrichtung generierter Hash-Code übermittelt wird.

24. Anordnung zum Bereitstellen eines drahtlosen lokalen Netzwerks, **gekennzeichnet durch** Mittel zur Durchführung des Verfahrens nach einem der vorhergehenden Ansprüche.
